(19) Europäisches Patentamt / European Patent Office / Office européen des brevets

(11) **EP 3 045 343 B1**

## (12) FASCICULE DE BREVET EUROPEEN

(45) Date de publication et mention
de la délivrance du brevet:
**15.12.2021 Bulletin 2021/50**

(51) Int Cl.:
**B60L 7/14** *(2006.01)* **B60L 9/18** *(2006.01)*
**B60M 3/06** *(2006.01)* **H02M 1/12** *(2006.01)*

(21) Numéro de dépôt: **16150818.9**

(22) Date de dépôt: **11.01.2016**

(54) **CONVERTISSEUR D'ALIMENTATION RÉSEAU ET/OU DE SOUS-STATION DE RÉCUPÉRATION DE L'ÉNERGIE DE FREINAGE**

WANDLER FÜR EINE ELEKTRISCHE ZULEITUNG UND/ODER SUBSTATION ZUR RÜCKGEWINNUNG DER BREMSENERGIE

A CONVERTOR FOR ELECTRIC FEEDER AND/OR SUBSTATION FOR RECUPERATING THE BRAKING ENERGY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.01.2015 FR 1550361**

(43) Date de publication de la demande:
**20.07.2016 Bulletin 2016/29**

(73) Titulaire: **ALSTOM Transport Technologies
93400 Saint-Ouen (FR)**

(72) Inventeurs:
• **BOU-SAADA, Johnny
B-1330 RIXENSART (BE)**
• **SADOUN, Jérôme
B-1420 BRAINE L'ALLEUD (BE)**
• **SCOTTINI, Jonathan
B-1070 Anderlecht (BE)**

(74) Mandataire: **Lavoix
2, place d'Estienne d'Orves
75441 Paris Cedex 09 (FR)**

(56) Documents cités:
**EP-A1- 1 350 666     EP-A1- 1 619 069
EP-A1- 1 985 490     EP-A2- 2 582 032
CN-A- 101 376 344**

• **Arnold Rodewald: "Elektromagnetische Verträglihkeit" In: "Elektromagnetische Vertr?glichkeit Grundlagen - Praxis", 1 September 2000 (2000-09-01), Vieweg, XP055492709, ISBN: 978-3-528-14924-6 pages 231-238,**

**Description**

La présente invention concerne un convertisseur de sous-station d'alimentation du réseau électrique et/ou de récupération de l'énergie de freinage de véhicules ferroviaires. L'invention se rapporte également à une sous-station équipée d'un tel convertisseur. L'invention concerne aussi un système de récupération de l'énergie de freinage comportant de telles sous-stations.

On connaît du document CN 101 376 344 A un système d'alimentation en énergie électrique et de récupération de l'énergie de freinage d'un train de métro.

On connaît du document EP 1 350 666 A1 un système d'alimentation en énergie électrique et de récupération de l'énergie de freinage de véhicules ferroviaires.

Les sous-stations de chemin de fer qui délivrent une tension continue sur les caténaires comportent généralement un pont à diodes. Un tel pont à diodes comporte six diodes pour assurer le redressement de trois phases et douze diodes pour assurer le redressement de six phases.

Du fait de leur simplicité, de telles sous-stations sont considérées comme la seule alternative pour créer la tension continue pour alimenter les trains.

Toutefois, de telles sous-stations ne permettent pas de récupérer l'énergie de freinage produite lors d'une décélération d'un train puisque les trains sont généralement équipés d'un système de récupération de l'énergie cinétique présentant une haute performance. De telles sous-stations ne permettent pas non plus la correction du $\cos(\varphi)$ à l'entrée de la sous-station et génèrent beaucoup d'harmoniques sur le réseau alternatif à l'entrée de la sous-station et sur le réseau continu à la sortie de la sous-station.

Pour remédier à l'inconvénient précédent, il est connu de récupérer l'énergie de freinage d'un véhicule ferroviaire à l'aide d'un redresseur à thyristor. Le redresseur est propre à réguler la tension de sortie DC. La tension DC est la tension redressée. La récupération se fait via un onduleur qui récupère le surplus d'énergie du réseau continu. L'onduleur renvoie au réseau triphasé un tel surplus. Dans un tel cas, l'onduleur est muni de son propre transformateur.

Mais, de telles sous-stations ne permettent pas de maintenir le niveau de tension délivrée à une valeur acceptable à vide et en charge.

De plus, de telles sous-stations sont généralement une source importante de pollution pour le réseau à courant alternatif.

Il existe donc un besoin pour une sous-station assurant une bonne efficacité du réseau électrique avec une faible pollution.

Pour cela, il est proposé un convertisseur électrique selon la revendication 1.

Suivant des modes de réalisation particuliers, le convertisseur comprend une ou plusieurs des caractéristiques des revendications 2 à 8.

En outre, il est proposé une sous-station selon la revendication 9.

Il est aussi proposé un système d'alimentation selon la revendication 10.

Il est aussi proposé un système d'alimentation selon la revendication 11.

Suivant des modes de réalisation particuliers, le système comprend une ou plusieurs des caractéristiques suivantes, prise(s) isolément ou suivant toutes les combinaisons techniquement possibles :

- les sous-stations ($S_k$) sont à équidistance les unes des autres.
- la valeur de la limite $U_{C3mink}$ est telle que la distance $F_k$ est supérieure ou égale à la distance $D_k$.
- le convertisseur électrique est apte à transférer de l'énergie électrique du réseau de distribution d'électricité vers la ligne d'alimentation pour alimenter en traction le ou les véhicules ferroviaires, de sorte que la sous-station $S_k$ est également associée à une zone $Z_{tk}$ d'alimentation en traction des véhicules ferroviaires dans laquelle, quelle que soit la position du véhicule ferroviaire à l'intérieur de la zone $Z_{tk}$, la sous-station $S_k$ est capable d'alimenter les moteurs électriques de traction du véhicule ferroviaire,

une zone $Z_{tk}$ d'alimentation en traction étant un segment $[L_{Gtk} ; L_{Dtk}]$ de la ligne d'alimentation centrée autour du point $P_k$ et dont les limites $L_{Gtk}$, $L_{Dtk}$ sont espacées de part et d'autre du point $P_k$ par une distance $T_k$ égale à $(U_{ssmaxk}-U_{Cmin})/(\rho\,I_{max})$, où :

- $U_{ssmaxk}$ est la tension maximale que peut générer le convertisseur électrique de la sous-station $S_k$ au niveau du point $P_k$ pour alimenter en traction un véhicule ferroviaire,
- $U_{Cmin}$ est la tension minimale non permanente admissible sur la ligne d'alimentation,

la valeur de la limite $U_{ssmaxk}$ étant telle que la distance $T_k$ est supérieure ou égale à $D_k/2$ ou à $D_k$.

- le module de commande est apte à faire basculer automatiquement le convertisseur électrique dans un mode d'alimentation en traction dans lequel le convertisseur électrique transfère continûment de l'énergie électrique du réseau de distribution d'électricité vers la ligne d'alimentation dès que la tension $U_{ssk}$ mesurée ou estimée est inférieure à un seuil $U_{dk}$.
- la limite $U_{C3mink}$ est strictement inférieure au seuil $U_{dk}$.
- lorsque la tension $U_{ssk}$ mesurée ou estimée est comprise entre la limite $U_{C3mink}$ et le seuil $U_{dk}$, le module de commande est apte à faire basculer le convertisseur électrique soit dans le mode de régénération soit dans le mode d'alimentation en traction en fonction du mode dans lequel se trouvait le convertisseur avant que la tension $U_{ssk}$ ne soit comprise entre la limite $U_{C3mink}$ et le seuil $U_{dk}$.

- la sous-station $S_k$ comporte un module de réglage de la valeur du seuil $Uc3k$ propre à faire varier la valeur de ce seuil de la limite basse $U_{C3mink}$ jusqu'à une limite haute $U_{C3maxk}$ supérieure ou égale à 90% d'une tension maximale $U_{Cmax}$ autorisée sur la ligne d'alimentation, ce module de réglage étant apte à maintenir la valeur du seuil $U_{C3k}$ strictement supérieure à la tension $U_{ssk}$ mesurée ou estimée tant que l'augmentation de la tension $U_{ssk}$ mesurée ou estimée reste inférieure à un seuil $a_{ssk}$ prédéterminé.

- lorsque l'intensité du courant traversant le convertisseur électrique est nulle, le module de réglage est apte à diminuer la valeur du seuil $U_{C3k}$ jusqu'à la limite $U_{C3mink}$ si l'augmentation de la tension $U_{ssk}$ est supérieure ou égale au seuil prédéterminé $a_{ssk}$.

- le module de commande est apte à commander le convertisseur électrique pour que ce convertisseur électrique transfère la plus grande quantité possible d'énergie électrique par unité de temps de la ligne d'alimentation vers le réseau de distribution d'électricité, dès que la tension $U_{ssk}$ mesurée ou estimée dépasse un seuil $U_{Cmax2k}$ supérieur ou égal à la limite $U_{C3maxk}$.

- le convertisseur électrique est un convertisseur commandé à au moins deux quadrants réalisé à l'aide de thyristors ou de transistors de puissance, le module de commande étant apte à commander le convertisseur pour maintenir constante la tension $U_{ssk}$ tant que la puissance électrique générée sur la ligne d'alimentation ou absorbée à partir de la ligne d'alimentation ne varie pas de plus de 50%.

D'autres caractéristiques et avantages de l'invention apparaîtront à la lecture de la description qui suit de modes de réalisation de l'invention, donnée à titre d'exemple uniquement et en référence aux dessins qui sont :

- figure 1, une illustration schématique de l'architecture d'un réseau ferroviaire équipé d'un système de sous-stations réversibles pour la récupération de l'énergie de freinage,
- figure 2, une vue d'un convertisseur de sous-station de récupération selon l'invention, et
- figure 3, une vue d'un autre convertisseur de sous-station de récupération selon l'invention.

Dans ces figures, les mêmes références sont utilisées pour désigner les mêmes éléments.

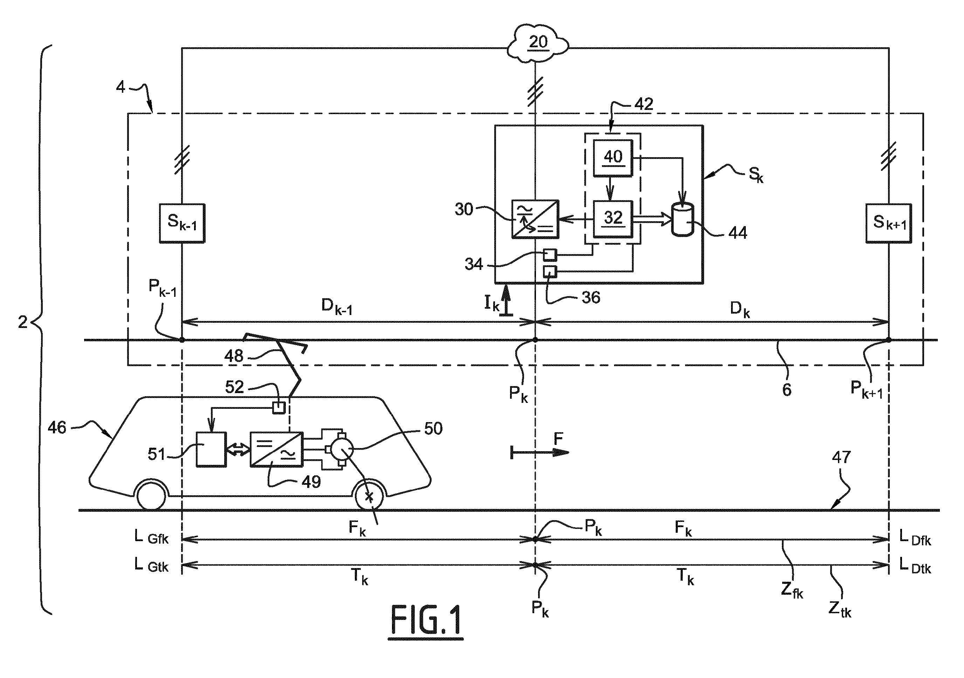

La figure 1 représente un réseau ferroviaire 2 équipé d'un système 4 de récupération de l'énergie de freinage.

Le système 4 comprend une ou plusieurs lignes d'alimentation et de nombreuses sous-stations réparties à intervalles réguliers le long de ces lignes d'alimentation. Pour simplifier la figure 1, seule une ligne d'alimentation 6 et trois sous-stations $S_{k-1}$, $S_k$ et $S_{k+1}$ ont été représentées.

La ligne d'alimentation est propre à alimenter avec une tension continue les véhicules ferroviaires circulant sur la voie ferrée.

Par l'expression « ligne d'alimentation », il est entendu aussi bien un fil aérien de caténaire sur lequel vient frotter un pantographe d'un véhicule ferroviaire pour s'alimenter en énergie électrique, qu'un troisième rail disposé le long des rails de voies de chemin de fer. Dans le cas d'un troisième rail, le pantographe est plus connu sous le terme de « frotteur ».

L'indice k représente le numéro d'ordre de chaque sous-station en partant d'une sous-station $S_0$ située à une extrémité de la ligne d'alimentation 6 et en se déplaçant dans la direction F indiquée sur la figure 1.

La tension sur la ligne d'alimentation 6 peut varier entre une tension maximale non permanente $U_{Cmax}$ et une tension minimale non permanente $U_{Cmin}$. Ces limites maximale et minimale sont typiquement définies par des normes comme la norme européenne EN 50 163 ou CEI 60850. Par exemple, ici, la limite $U_{Cmax}$ est égale à 1 000 Vdc et la limite $U_{Cmin}$ est égale à 500 Vdc pour une ligne d'alimentation dont la tension nominale $U_{Cnom}$ est égale à 750 Vdc.

Chaque sous-station $S_k$ est électriquement raccordée à la ligne d'alimentation 6 en un point $P_k$ de raccordement. Le point $P_k$ est séparé du point $P_{k+1}$ par une distance $D_k$ et du point $P_{k-1}$ par une distance $D_{k-1}$. La distance $D_k$ est également connue sous le terme de distance inter-stations. De préférence, la distance $D_k$ est la même pour tous les indices k de sorte que chaque sous-stations sont à équidistance les unes des autres.

La distance inter-stations $D_k$ est supérieure à plusieurs centaines de mètres. La distance $D_k$ est également suffisamment courte pour que la sous-station $S_k$ puisse alimenter en traction un véhicule ferroviaire dont le pantographe est situé au niveau du point $P_{k+1}$. Ici la distance $D_k$ est comprise entre 1000 m et 2000 m pour une tension nominale de 750 Vdc et peut aller jusqu'à 20 km pour une tension nominale de 3000 Vdc.

Ici, par alimentation en traction, on désigne le fait qu'une sous-station génère sur la ligne d'alimentation 6 suffisamment de puissance pour alimenter les moteurs de traction du véhicule ferroviaire et donc pour permettre un déplacement de ce véhicule ferroviaire dans les conditions de tension fixées plus haut.

Chaque sous-station $S_k$ est associée à une zone $Z_{tk}$ d'alimentation en traction. La zone $Z_{tk}$ est un segment $[L_{Gtk} ; L_{Dtk}]$ de la ligne d'alimentation 6 centrée autour du point $P_k$. Les limites gauche et droite $L_{Gtk}$ et $L_{Dtk}$ sont espacées du point $P_k$ par une distance $T_k$. La distance $T_k$ est définie par la relation suivante :

$$T_k = \frac{U_{ss\,max\,k} - U_{Cmin}}{\rho . I_{max}}$$

Où :

- $U_{ss\ max\ k}$ est la tension maximale en traction que peut générer la sous-station $S_k$ au niveau du point $P_k$ pour alimenter en traction un véhicule ferroviaire,
- $U_{Cmin}$ est la tension minimale non temporaire admissible sur la ligne d'alimentation 6,
- $p$ est la résistance linéique de la ligne d'alimentation 6 et de ses conducteurs parallèles ou feeders en anglais, et
- $I_{max}$ est l'intensité maximale admissible pour le courant circulant dans la ligne d'alimentation 6.

Par résistance linéique, on désigne ici la valeur de la résistance par unité de longueur.

La zone $Z_{tk}$ correspond donc au segment de la ligne d'alimentation 6 dans lequel, quelle que soit la position du véhicule ferroviaire à l'intérieur de cette zone, la sous-station $S_k$ est apte à alimenter en traction ce véhicule ferroviaire. Au-delà des limites $L_{Gtk}$ et $L_{Dtk}$, la chute de tension due à la résistance linéique de la ligne d'alimentation 6 est telle que même si la sous-station $S_k$ génère la tension $U_{ss\ max\ k}$ au niveau du point $P_k$, la tension au niveau du pantographe du véhicule ferroviaire peut être inférieure à la tension $U_{Cmin}$. Le véhicule ferroviaire ne peut donc pas être systématiquement alimenté en traction au-delà de ces limites $L_{Gtk}$ et $L_{Dtk}$ par la sous-station $S_k$.

A titre d'illustration, $U_{ss\ max\ k}$ est supérieur ou égal à $U_{Cnom}$. Ces choix sont faits lors de la conception du réseau 2 et imposent donc la distance $T_k$. Ensuite, la distance $D_k$ est choisie égale ou légèrement inférieure à la distance $T_k$ de sorte que quelle que soit la position du véhicule ferroviaire le long de la ligne d'alimentation 6, celui-ci se trouve toujours simultanément dans deux zones $Z_{tk}$ et $Z_{tk+i}$. Un tel choix de la distance $D_k$ permet de garantir que le véhicule ferroviaire peut être alimenté quelle que soit sa position le long de la ligne d'alimentation 6 et ceci même en cas de panne de l'une des sous-stations $S_k$.

La sous-station $S_k$ est également associée à une zone $Z_{fk}$ de récupération de l'énergie de freinage. Cette zone $Z_{fk}$ est un segment [$L_{Gfk}$ ; $L_{Dfk}$] de la ligne d'alimentation 6 centrée autour du point $P_k$. Les limites $L_{Gfk}$ et $L_{Dfk}$ sont espacées du point $P_k$ par une distance $F_k$. La distance $F_k$ est définie par la relation suivante :

$$F_k = \frac{U_{Cmax} - U_{C3\ min\ k}}{\rho.I_{max}}$$

Où :

- $U_{Cmax}$ est la tension maximale non permanente admissible sur la ligne d'alimentation 6,
- $U_{C3min\ k}$ est une limite basse pour la valeur d'un seuil $Uc3k$ qui sera défini plus loin.

Ici, $U_{C3min\ k}$ est choisi inférieur ou égal à $U_{Cnom}$. Ainsi, la distance $F_k$ est supérieure ou égale à la distance $D_k$.

Par exemple, la limite $U_{C3min\ k}$ est choisie égale à 700 Vdc.

La zone $Z_{fk}$ est une zone dans laquelle, quelle que soit la position du véhicule ferroviaire qui freine à l'intérieur de cette zone $Z_{fk}$, la sous-station $S_k$ peut récupérer de l'énergie de freinage de ce véhicule ferroviaire.

Etant donné que la distance $F_k$ est supérieure ou égale à la distance $D_k$, il est donc possible de récupérer l'énergie de freinage d'un véhicule ferroviaire qui freine soit au niveau du point $P_{k-1}$, soit au niveau du point $P_{k+1}$. Ainsi, même si la sous-station $S_k$ est hors service, les sous-stations $S_{k-1}$ et $S_{k+1}$ permettent de récupérer l'énergie de freinage du véhicule ferroviaire et ceci quelle que soit la position du véhicule ferroviaire entre les points $P_{k-1}$ et $P_{k+1}$. Il est donc possible de garantir que toute l'énergie de freinage du véhicule ferroviaire sera récupérée même si une sous-station est hors service.

Toutes les sous-stations $S_k$ sont raccordées à un même réseau grande distance 20 de distribution d'électricité. Ici le réseau 20 est un réseau de tension alternative triphasée haute tension de catégorie A ou B. Par haute tension alternative de catégorie A ou B, on désigne ici une tension alternative comprise entre 1 000 et 50 000 Vac. Conformément à l'enseignement de la demande de brevet FR 2 873 332, ce réseau 20 peut également être un réseau de basse tension alternative triphasée. Ici, par basse tension alternative triphasée, on désigne une tension inférieure à 1000 Vac. Typiquement, ce réseau de basse tension alternative triphasée sera alors un réseau de basse tension de catégorie B ou BTB, c'est-à-dire dont la tension alternative est comprise entre 500 et 1 000 Vac.

Ici, toutes les sous-stations $S_k$ sont identiques les unes aux autres et seule la sous-station $S_k$ est représentée en détail sur la figure 1.

La sous-station $S_k$ comporte un convertisseur quatre quadrants 30 raccordé d'un côté au réseau 20 et de l'autre côté au point $P_k$ sur la ligne d'alimentation 6.

Ce convertisseur 30 est apte à redresser la tension triphasée du réseau 20 pour délivrer sur la ligne d'alimentation 6 une tension continue redressée comprise entre $U_{ssmaxk}$ et $U_{Cmin}$. Le convertisseur 30 est également apte à onduler la tension continue présente sur la ligne d'alimentation 6 pour délivrer sur le réseau 20 une tension triphasée construite à partir de cette tension continue comprise entre $U_{C3mink}$ et $U_{Cmax}$. Le convertisseur 30 bidirectionnel fonctionnant à la fois en redresseur et en onduleur.

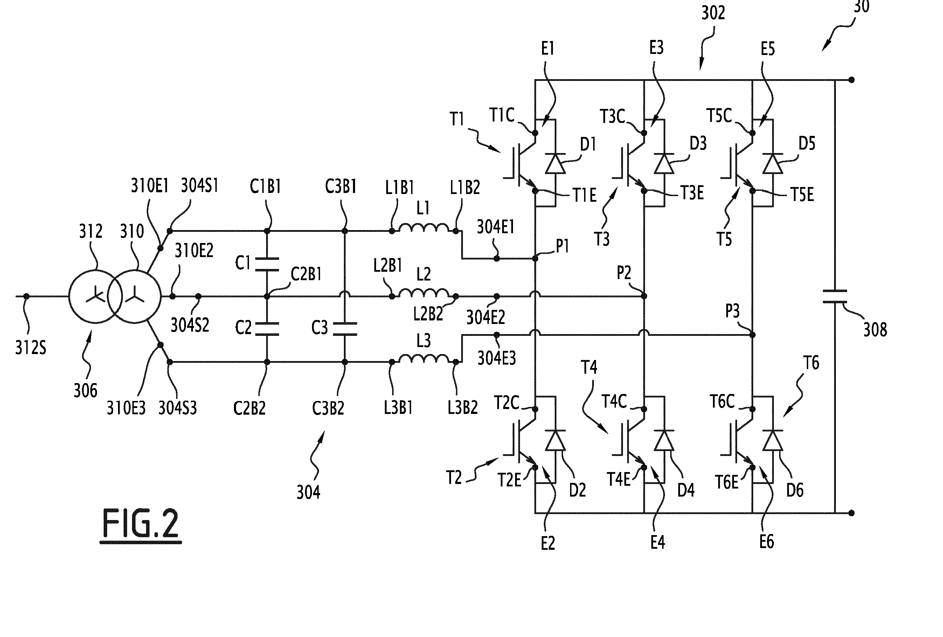

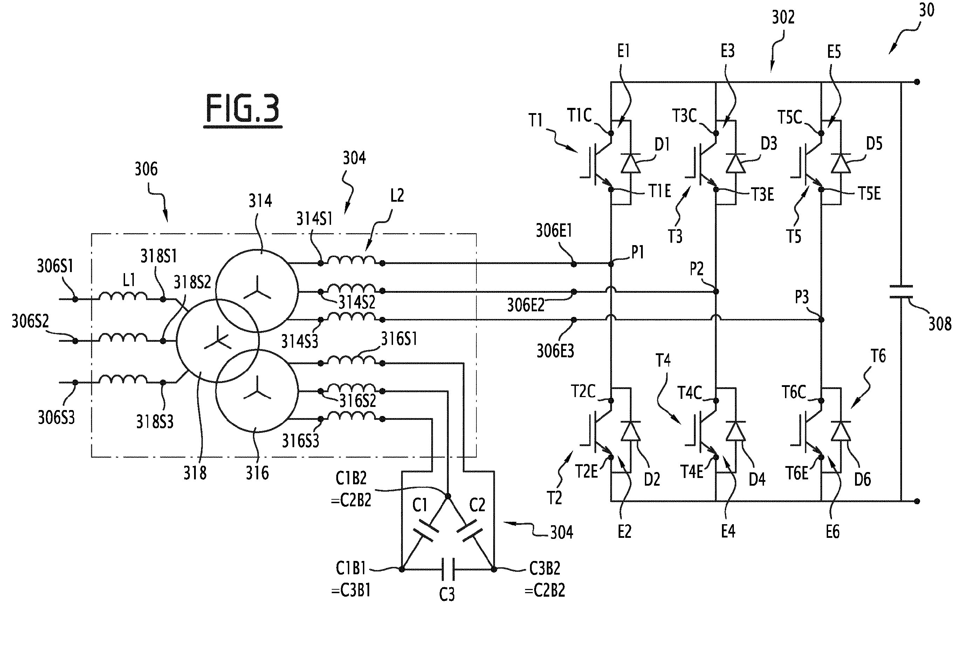

Les différents composants du convertisseur 30 sont plus précisément décrits en référence aux figures 2 et 3 ci-après.

Le convertisseur 30 est un convertisseur commandable. A cet effet, la sous-station $S_k$ comporte une unité de commande 32 propre à commander le convertisseur 30 pour le faire fonctionner en tant que redresseur et, en alternance, en tant qu'onduleur. L'unité 32 permet également d'asservir la tension $U_{ssk}$ délivrée ou absorbée au niveau du point $P_k$ sur une consigne $U_{ssc}$. A cet effet, la sous-station $S_k$ comporte un capteur 34 de l'intensité du courant $I_k$ et un capteur 36 de la tension $U_{ssk}$ au niveau du point $P_k$.

Plus précisément, l'unité 32 est apte à faire basculer le convertisseur 30 dans un mode de régénération ou de récupération d'énergie électrique dès que la tension $U_{ssk}$ mesurée est supérieure à un seuil $U_{C3k}$. L'unité 32 est également apte à faire basculer automatiquement le convertisseur 30 dans un mode d'alimentation en traction dès que la tension $U_{ssk}$ est inférieure à un seuil $U_{dk}$. Par exemple, le seuil $U_{dk}$ est inférieur ou égal à $U_{Cnom}$.

La sous-station $S_k$ comporte également un module 40 de réglage de la valeur du seuil $U_{C3k}$ en fonction de la tension $U_{ssk}$ mesurée.

L'unité 32 et le module 40 sont, par exemple, réalisés à partir d'un calculateur programmable 42 apte à exécuter des instructions enregistrées dans une mémoire 44 raccordée à ce calculateur. A cet effet, la mémoire 44 comporte ici des instructions pour l'exécution du procédé de la figure 2 ainsi que les différentes valeurs des seuils et des limites utilisées ici.

Le système 2 comprend également un véhicule ferroviaire 46 circulant sur une voie ferrée 47. Ce véhicule 46 est électriquement connecté à la ligne d'alimentation 6 par l'intermédiaire d'un pantographe 48. Le pantographe 48 permet de capter de l'énergie électrique à partir de la ligne d'alimentation 6 et de la délivrer à l'entrée d'un convertisseur électrique 49 embarqué dans le véhicule 46. Le convertisseur 49 est apte à transformer la tension continue obtenue par l'intermédiaire du pantographe 48 en une tension triphasée d'alimentation d'un moteur 50 de traction. Le moteur 50 est, par exemple, un moteur électrique synchrone ou asynchrone. Ce moteur 50 est apte à entraîner en rotation des roues du véhicule 46. Le moteur 50 est également apte à fonctionner en tant que générateur pour freiner le véhicule 46. Dans ce cas, le convertisseur 49 est apte à fonctionner en tant que redresseur pour renvoyer l'énergie de freinage sur la ligne d'alimentation 6.

Le convertisseur 49 est un convertisseur commandable par une unité de pilotage 51. Cette unité de pilotage 51 est apte à protéger le convertisseur 49 en fonction d'une tension $U_T$ mesurée au niveau du pantographe 48 par l'intermédiaire d'un capteur 52. A cet effet, l'unité 51 est apte à déclencher l'isolation électrique du véhicule électrique 46 de la ligne d'alimentation 6 en fonction de la tension $U_T$ mesurée.

Le véhicule 46 est dépourvu de résistance de freinage ou de rhéostat embarqué apte à dissiper sous forme de chaleur la totalité de l'énergie de freinage produite par le moteur 50 lorsque celui-ci fonctionne en générateur.

Selon l'exemple de la figure 2, un convertisseur 30 particulier est proposé.

Comme précédemment, le convertisseur 30 est intercalé entre le réseau de distribution 20 et la ligne d'alimentation 6.

Le convertisseur 30 comporte un onduleur 302, un dispositif de filtrage 304 et un transformateur 306.

L'onduleur 302 est un convertisseur continu-alternatif.

L'onduleur 302 est connecté à la ligne d'alimentation 6 lui délivrant une tension de 750 V.

A partir de cette alimentation continue, selon l'exemple de la figure 2, le premier onduleur 302 est propre à délivrer trois phases P1, P2 et P3 d'un courant alternatif triphasé au dispositif de filtrage 304. Ces trois phases P1, P2 et P3 sont créées en utilisant, pour chaque phase, deux ensembles transistor-diode E1, E2, E3, E4, E5 et E6 mis en série et soumis au potentiel continu. Chacun des ensembles transistor-diode E1, E2, E3, E4, E5 et E6 comporte un transistor T1, T2, T3, T4, T5 et T6 en parallèle avec une diode D1, D2, D3, D4, D5 et D6.

Par exemple, la première phase P1 correspond au potentiel d'un point entre le premier transistor T1 et le deuxième transistor T2. Le premier transistor T1 a son collecteur T1C relié au potentiel de 750 V et son émetteur T1E est relié au collecteur T2C du deuxième transistor T2. L'émetteur T2E du deuxième transistor T2 est relié à la masse.

De même, la deuxième phase P2 correspond au potentiel d'un point entre deux transistors, le troisième transistor T3 et le quatrième transistor T4. Le troisième transistor T3 a son collecteur T3C relié au potentiel de 750 V et son émetteur T3E est relié au collecteur T4C du quatrième transistor T4. L'émetteur T4E du quatrième transistor T4 est relié à la masse.

De même, la troisième phase P3 correspond au potentiel d'un point entre deux transistors, le cinquième transistor T5 et le sixième transistor T6. Le cinquième transistor T5 a son collecteur T5C relié au potentiel de 750 V et son émetteur T5E est relié au collecteur T6C du sixième transistor T6. L'émetteur T6E du sixième transistor T6 est relié à la masse.

Selon l'exemple de la figure 2, chacun des transistors T1, T2, T3, T4, T5 et T6 est un transistor IGBT supportant 1700 Volts. Un transistor bipolaire à grille isolée (IGBT, de l'anglais Insulated Gate Bipolar transistor) est un dispositif semi-conducteur de la famille des transistors utilisé comme interrupteur électronique, principalement dans les montages électroniques de puissance. Un composant supportant 1700 V est usuellement un composant spécifique, spécialement dédié au domaine ferroviaire.

L'onduleur 302 comporte, en outre, une capacité d'entrée 308.

La capacité d'entrée 308 en positionnée en parallèle de chacune des lignes permettant de générer les trois phases P1, P2 et P3.

Le dispositif de filtrage 304 est propre à filtrer chacune des trois phases P1, P2 et P3.

Le dispositif de filtrage 304 étant un dispositif de filtrage 304 pour une tension triphasée, le dispositif de filtrage 304 comporte trois entrées 304E1, 304E2 et 304E3, pour les trois phases P1, P2, P3 de l'onduleur 302 et trois sorties 304S1, 304S2 et 304S3 correspondantes, chacune étant reliée au transformateur 306.

Chacune des phases P1, P2 et P3 est filtrée par un filtre de même nature dans le dispositif de filtrage 304 de la figure 2.

De préférence, le filtre appliqué à chaque phase est identique.

Selon l'exemple de la figure 2, chaque filtre du dispositif de filtrage 304 est un circuit LC.

Un circuit LC est un circuit électrique comprenant au moins un dipôle générateur d'impédance inductive et au moins un dipôle générateur d'impédance capacitive.

A titre d'exemple, le dipôle générateur d'impédance inductive est une bobine. Une bobine, solénoïde, auto-inductance ou quelquefois self (par anglicisme), est un composant courant en électrotechnique et électronique. Une bobine est constituée d'un enroulement de fil conducteur éventuellement autour d'un noyau en matériau ferromagnétique qui peut être un assemblage de feuilles de tôle ou un bloc de ferrite (céramique ferromagnétique). Les physiciens et ingénieurs français l'appellent souvent par synecdoque « inductance », ce terme désignant la propriété caractéristique de la bobine, qui est son opposition à la variation du courant dans ses spires.

Dans la suite, dans un souci de simplicité, le terme « inductance » est utilisé pour signifier un dipôle générateur d'impédance inductive.

Aussi, dans le cas représenté, le dispositif de filtrage 304 comporte trois inductances L1, L 2 et L3 et trois condensateurs C1, C2 et C3.

Chaque composant du dispositif de filtrage 304 comporte deux bornes.

Ainsi, la première inductance L1 comporte deux bornes, une première borne L1B1 et une deuxième borne L1B2. La deuxième inductance L2 comporte deux bornes, une première borne L2B1 et une deuxième borne L2B2. La troisième inductance L3 comporte deux bornes, une première borne L3B1 et une deuxième borne L3B2. Le premier condensateur C1 comporte deux bornes, une première borne C1B1 et une deuxième borne C1B2. Le deuxième condensateur C2 comporte deux bornes, une première borne C2B1 et une deuxième borne C2B2. Le troisième condensateur C3 comporte deux bornes, une première borne C3B1 et une deuxième borne C3B2.

La première borne L1B1 de la première inductance L1 est reliée à la première borne C3B1 du troisième condensateur C3. La deuxième borne L1B2 de la première inductance L1 est reliée à la première entrée 304E1 du dispositif de filtrage 304 correspondant à la première phase P1.

La première borne L2B1 de la deuxième inductance L2 est reliée à la deuxième borne C1B2 du premier condensateur C1 et à la première borne C2B1 du deuxième condensateur C2. La deuxième borne L2B2 de la deuxième inductance L2 est reliée à la deuxième entrée 304E2 du dispositif de filtrage 304 correspondant à la deuxième phase P2.

La première borne L3B1 de la troisième inductance L3 est reliée à la deuxième borne C3B2 du troisième condensateur C3. La deuxième borne L3B2 de la troisième inductance L3 est reliée à la troisième entrée 304E3 du dispositif de filtrage 304 correspondant à la troisième phase P3.

Le premier condensateur C1 est intercalé entre la première sortie 304S1 du dispositif de filtrage 304 correspondant à la première phase P1 et la deuxième sortie 304S2 du dispositif de filtrage 304 correspondant à la deuxième phase P2. Cela signifie que la première borne C1B1 du premier condensateur C1 est reliée à la première sortie 304S1 du dispositif de filtrage 304 tandis que la deuxième borne C1B2 du premier condensateur C1 est reliée à la deuxième sortie 304S2 du dispositif de filtrage 304.

Le deuxième condensateur C2 est intercalé entre la deuxième sortie 304S2 du dispositif de filtrage 304 correspondant à la deuxième phase P2 et la troisième sortie 304S3 du dispositif de filtrage 304 correspondant à la troisième phase P3. Cela signifie que la première borne C2B1 du deuxième condensateur C2 est reliée à la deuxième sortie 304S2 du dispositif de filtrage 304 tandis que la deuxième borne C2B2 du deuxième condensateur C2 est reliée à la troisième sortie 304S3.

Dans l'exemple de la figure 2, la première borne C2B1 du deuxième condensateur C2 est reliée à la deuxième borne C1B2 du premier condensateur C1.

Le troisième condensateur C3 est intercalé entre la première sortie 304S1 du dispositif de filtrage 304 correspondant à la première phase P1 et la troisième sortie 304S3 du dispositif de filtrage 304 correspondant à la troisième phase P3. Cela signifie que la première borne C3B1 du troisième condensateur C3 est reliée à la première sortie 304S1 du dispositif de filtrage 304 tandis que la deuxième borne C3B2 du troisième condensateur C3 est reliée à la troisième sortie 304S3 du dispositif de filtrage 304.

Ainsi, dans l'exemple de la figure 2, la première borne C1B1 du premier condensateur C1 est reliée à la première borne C3B1 du troisième condensateur C3. En outre, la deuxième borne C2B2 du deuxième condensateur C3 est reliée à la deuxième borne C3B2 du troisième condensateur C3.

Le transformateur 306 est relié d'une part aux sorties du dispositif de filtrage 304 et d'autre part au réseau de distribution d'électricité 20.

Un transformateur électrique (parfois abrégé en *transfo*) est une machine électrique permettant de modifier les valeurs de tension et d'intensité du courant délivrées par une source d'énergie électrique alternative, en un système de tension et de courant de valeurs différentes, mais de même fréquence et de même forme. Il effectue cette transformation avec un excellent rendement.

Selon l'exemple de la figure 2, le transformateur 306 comporte un enroulement primaire 310 et un enroulement secondaire 312, l'enroulement secondaire 312 étant propre à délivrer un signal sur sa sortie 312S dont la tension est différente de la tension du signal injecté sur les entrées 310E1, 310E2 et 310E3 de l'enroulement primaire 310.

En l'occurrence, le transformateur 306 est propre à générer un signal de sortie dont la tension s'élève à 15 kV lorsque la tension du signal injecté s'élève à 457 V.

Le fonctionnement du dispositif de la figure 2 est maintenant décrit.

De manière générale, le convertisseur 30 électrique est apte à transférer de l'énergie électrique de la ligne d'alimentation 6 vers le réseau de distribution d'électricité 20 pour récupérer l'énergie de freinage des véhicules ferroviaires.

Plus précisément, le convertisseur 30 est propre à redresser la tension triphasée délivrée par le réseau de distribution 20 en une tension continue et à délivrer la tension continue à la ligne d'alimentation 6.

Le convertisseur 30 est également propre à convertir la tension continue de la ligne d'alimentation 6 pour délivrer sur le réseau de distribution 20 une tension triphasée construite à partir de la tension continue de la ligne d'alimentation.

Autrement formulé, le convertisseur 30 est propre à onduler la tension continue présente sur la ligne d'alimentation 6 pour délivrer sur le réseau de distribution 20 une tension triphasée construite à partir de cette tension continue.

La sous-station équipée d'un tel convertisseur 30 présente l'avantage que la fonction de redressement et d'ondulation du convertisseur 30 est réalisée avec un seul onduleur 302.

Le circuit LC qui se trouve après le transformateur 306 à haute tension associé avec une commande adéquate de l'onduleur 302 de puissance assure un filtrage de la tension rejetée sur le réseau de distribution 20 triphasé.

La commande de l'onduleur 302 permet aussi de garantir un facteur en cos(φ) unitaire vue par le transformateur 306 que le montage soit en traction ou en freinage. Le phénomène d'empiétement, c'est-à-dire de dégradation de la valeur du facteur en cos(φ) en fonction de la charge, est ainsi évité.

De plus, le contrôle du transit de puissance depuis la ligne d'alimentation 6 vers le réseau de distribution 30 est assuré par l'onduleur 302.

En outre, Le choix des angles de commutation ainsi que les valeurs des inductances de dispersion du transformateur 306 et les capacités triphasés permettent d'atteindre un niveau de filtrage assez élevé et très performant.

Bien que le rendement global du convertisseur soit moins grand que dans l'état de la technique, du fait de la meilleure qualité du signal électrique produit, en considérant le système global, le rendement est meilleur.

Ainsi, le convertisseur 30 proposé permet d'assurer la réversibilité de l'écoulement électrique, une régulation de la tension continue ainsi qu'un filtrage actif de la tension du réseau triphasé.

De ce fait, la sous-station assure une bonne efficacité du réseau électrique avec une faible pollution.

La figure 3 illustre un convertisseur 30 selon un autre mode de réalisation. Les éléments identiques au mode de réalisation de la figure 1 ne sont pas décrits à nouveau. Seules les différences sont mises en évidence.

Du point de vue électrique, le schéma est typiquement le même que le convertisseur 30 de la figure 2.

Le transformateur 306 comporte deux enroulements primaires 314 et 316 et un enroulement secondaire 318.

Chaque inductance L1, L2, L3 est reliée aux trois connecteurs triphasés de chaque enroulement 314, 316, 318.

Plus précisément, pour la première phase P1, la première inductance L1 est connectée à la première sortie 318S1 de l'enroulement secondaire 318 et à la première sortie 306S1 du transformateur 306, la deuxième inductance L2 est connectée à la première sortie 314S1 du premier enroulement primaire 314 et à la première sortie 306S1 du transformateur 306 et la troisième inductance L3 est connectée à la première sortie 316S1 du premier enroulement primaire 316 et à la deuxième borne C2B2 du deuxième condensateur C2. Une description similaire est réalisable pour la deuxième phase P2 et la troisième phase P3.

Dans un mode de réalisation de la figure 3, les inductances L1, L2 et L3 sont intégrées dans le transformateur 306.

Le fonctionnement du convertisseur 30 selon le mode de réalisation de la figure 3 est identique au fonctionnement du convertisseur 30 selon le mode de réalisation de la figure 2. Le fonctionnement n'est donc pas décrit à nouveau, les mêmes remarques s'appliquant.

Le convertisseur 30 selon le mode de réalisation de la figure 3 présente les mêmes avantages que le convertisseur 30 selon le mode de réalisation de la figure 1.

De plus, dans le mode de réalisation de la figure 3, il apparaît que les trois inductances L1, L2 et L3 ont été intégrées dans le transformateur 306.

Cela permet de refroidir les inductances L1, L2 et L3 et le transformateur 306 avec le même circuit de refroidissement. Le circuit de refroidissement spécifique aux inductances L1, L2 et L3 est donc supprimé.

De plus, le boîtier du transformateur 306 comporte également les inductances L1, L2 et L3, ce qui permet d'éviter d'utiliser un bac à inductances.

Par dispositif de filtrage, il est entendu l'association d'au moins deux composants physiques, comme une inductance et une résistance, reliés électriquement l'un à l'autre. Un élément présentant une grandeur électrique parasite comme un fil ne saurait être assimilé à un composant dans ce contexte.

## Revendications

1. Convertisseur électrique (30) pour sous-station ($S_k$) d'alimentation d'un réseau électrique et/ou de récupération de l'énergie de freinage de véhicules ferroviaires circulant sur une voie ferrée, la sous-station étant raccordée à une ligne d'alimentation (6) propre à alimenter avec une tension continue les véhicules ferroviaires circulant sur la voie ferrée, la sous-station ($S_k$) comprenant un réseau de distribution d'électricité (20) propre à délivrer une tension triphasée correspondant à trois phases, le convertisseur (30) comprenant :

   - un transformateur (306) propre à contrôler la valeur de la tension triphasée délivrée par le réseau de distribution d'électricité,
   - un dispositif de filtrage (304) propre à filtrer la tension triphasée du transformateur (306), le dispositif de filtrage (304) étant un filtre réduisant les harmoniques de courant susceptibles d'être réinjectées sur le réseau de distribution d'électricité (20), et
   - un onduleur (302) relié au dispositif de filtrage (304) ;
   **caractérisé en ce que**, pour chaque phase générée, l'onduleur (302) comporte en série deux ensembles (E1, E2, E3, E4, E5, E6), chaque ensemble (E1, E2, E3, E4, E5, E6) comportant une diode (D1, D2, D3, D4, D5, D6) et un transistor (T1, T2, T3, T4, T5, T6) en parallèle ; le dispositif de filtrage (304) est un circuit LC ; et le transformateur (306) comporte chacun des dipôles propres à générer une inductance du dispositif de filtrage (304).

2. Convertisseur selon la revendication 1, dans lequel chaque transistor (T1, T2, T3, T4, T5, T6) est un transistor bipolaire à grille isolée.

3. Convertisseur selon la revendication 1 ou 2, dans lequel le dispositif de filtrage (304) comporte trois inductances (L1, L2, L3) et trois condensateurs (C1, C2, C3).

4. Convertisseur selon la revendication 3, dans lequel les trois condensateurs (C1, C2, C3) sont agencés en étoile.

5. Convertisseur selon l'une quelconque des revendications 3 ou 4, dans lequel le dispositif de filtrage (304) comporte trois entrées (304E1, 304E2, 304E3), pour les trois phases (P1, P2, P3) de l'onduleur (302) et trois sorties (304S1, 304S2, 304S3) correspondantes, le transformateur (306) étant relié d'une part aux sorties du dispositif de filtrage (304) et d'autre part au réseau de distribution d'électricité (20) ;

   une première borne (L1B1) de la première inductance (L1) étant reliée à une première borne (C1B1) du premier condensateur (C1) et à une première borne (C3B1) du troisième condensateur (C3) ; une deuxième borne (L1B2) de la première inductance (L1) étant reliée à la première entrée (304E1) du dispositif de filtrage (304) correspondant à la première phase (P1) ; une première borne (L2B1) de la deuxième inductance (L2) étant reliée à une deuxième borne (C1B2) du premier condensateur (C1) et à une première borne (C2B1) du deuxième condensateur (C2) ; une deuxième borne (L2B2) de la deuxième inductance (L2) étant reliée à la deuxième entrée (304E2) du dispositif de filtrage (304) correspondant à la deuxième phase (P2) ; une première borne (L3B1) de la troisième inductance (L3) étant reliée à une deuxième borne (C2B2) du deuxième condensateur (C2) et à une deuxième borne (C3B2) du troisième condensateur (C3) ; une deuxième borne (L3B2) de la troisième inductance (L3) étant reliée à la troisième entrée (304E3) du dispositif de filtrage (304) correspondant à la troisième phase (P3).

6. Convertisseur selon la revendication 5, dans lequel une première borne (C1B1) du premier condensateur (C1) est reliée à la première sortie (304S1) du dispositif de filtrage (304) et la deuxième borne (C1B2) du premier condensateur (C1) est reliée à la deuxième sortie (304S2) du dispositif de filtrage (304) ;

   la première borne (C2B1) du deuxième condensateur (C2) étant reliée à la deuxième sortie (304S2) du dispositif de filtrage (304) et une deuxième borne (C2B2) du deuxième condensateur (C2) étant reliée à la troisième sortie (304S3) ; la première borne (C3B1) du troisième condensateur (C3) étant reliée à la première sortie (304S1) du dispositif de filtrage (304) et la deuxième borne (C3B2) du troisième condensateur (C3) étant reliée à la troisième sortie (304S3) du dispositif de filtrage (304).

7. Convertisseur selon l'une quelconque des revendications 3 à 6, dans lequel le transformateur (306) comporte deux enroulements primaires (314, 316) et un enroulement secondaire (318), et chaque inductance étant reliée aux trois connecteurs triphasés de chaque enroulement (314, 316, 318).

**8.** Convertisseur selon la revendication 7, dans lequel le dispositif de filtrage (304) comporte neuf inductances et trois condensateurs (C1, C2, C3) ;

pour la première phase (P1), la première inductance (L1) étant connectée à une première sortie (318S1) de l'enroulement secondaire (318) et à une première sortie (306S1) du transformateur (306), la deuxième inductance (L2) étant connectée à une première sortie (314S1) du premier enroulement primaire (314) et à une première entrée (306E1) du transformateur (306) et la troisième inductance (L3) étant connectée à une première sortie (316S1) du premier enroulement primaire (316) et à une deuxième borne C2B2 du deuxième condensateur (C2) ;

pour la deuxième phase (P2), la quatrième inductance étant connectée à une deuxième sortie (318S2) de l'enroulement secondaire (318) et à une deuxième sortie (306S2) du transformateur (306), la cinquième inductance étant connectée à une deuxième sortie (314S2) du premier enroulement primaire (314) et à une deuxième entrée (306E2) du transformateur (306) et la sixième inductance étant connectée à une deuxième sortie (316S2) du premier enroulement primaire (316) et à une deuxième borne (C1B2) du premier condensateur (C1) ;

pour la troisième phase (P3), la septième inductance étant connectée à une troisième sortie (318S3) de l'enroulement secondaire (318) et à une troisième sortie (306S3) du transformateur (306), la huitième inductance étant connectée à une troisième sortie (314S3) du premier enroulement primaire (314) et à une troisième entrée (306E3) du transformateur (306) et la neuvième inductance étant connectée à une troisième sortie (316S3) du premier enroulement primaire (316) et à une première borne (C3B1) du troisième condensateur (C3).

**9.** Sous-station de d'alimentation d'un réseau électrique et/ou de récupération ($S_k$) de l'énergie de freinage de véhicules ferroviaires circulant sur une voie ferrée, la sous-station ($S_k$) étant raccordée à une ligne d'alimentation (6) propre à alimenter avec une tension continue les véhicules ferroviaires circulant sur la voie ferrée, la sous-station ($S_k$) comprenant :

- un réseau de distribution d'électricité (20) propre à délivrer une tension triphasée correspondant à trois phases,
- un unique convertisseur (30) selon l'une quelconque des revendications 1 à 8.

**10.** Système d'alimentation d'un réseau électrique et/ou de récupération de l'énergie de freinage de véhicules ferroviaires, le système comportant une pluralité de sous-stations ($S_k$) selon la revendication 9.

**11.** Système d'alimentation d'un réseau électrique et/ou de récupération de l'énergie de freinage de véhicules ferroviaires selon la revendication 10 :

la pluralité de sous-stations ($S_k$) étant espacées les unes des autres par une distance ($D_k$) supérieure à 100 mètres, chaque sous-station ($S_k$) étant électriquement raccordée à la ligne d'alimentation (6) en un point ($P_k$) de raccordement et équipée :

• d'un capteur (36) ou un estimateur d'une tension $U_{ssk}$ au niveau du point ($P_k$) de raccordement,
• d'un module (32) de commande du convertisseur (30) apte à faire basculer automatiquement le convertisseur (30) dans un mode de régénération dans lequel le convertisseur (30) transfère continûment de l'énergie électrique de la ligne d'alimentation vers le réseau de distribution d'électricité pour récupérer l'énergie de freinage des véhicules ferroviaires, dès que la tension $U_{ssk}$ mesurée ou estimée est supérieure à un seuil $U_{C3k}$, de sorte que chaque sous-station est associée à sa propre zone $Z_{fk}$ de récupération d'énergie de freinage dans laquelle, quelle que soit la position du véhicule ferroviaire à l'intérieur de cette zone $Z_{fk}$, la sous-station $S_k$ est capable de récupérer au moins une partie de l'énergie de freinage de ce véhicule ferroviaire,

une zone $Z_{fk}$ de récupération de l'énergie de freinage étant un segment $[L_{Gfk} ; L_{Dfk}]$ de la ligne d'alimentation (6) centrée autour du point $P_k$ et dont les limites $L_{Gfk}$, $L_{Dfk}$ sont espacées de part et d'autre du point $P_k$ par une distance $F_k$ égale à $(U_{Cmax}-U_{C3mink})/(\rho\, I_{max})$ où :

• $U_{Cmax}$ est une tension maximale non permanente admissible sur la ligne d'alimentation,
• $U_{C3mink}$ est la valeur minimale que peut prendre le seuil $Uc3k$ lors du fonctionnement de la sous-station,
• $p$ est la résistance linéique de la ligne d'alimentation, et
• $I_{max}$ est l'intensité maximale admissible pour le courant circulant sur la ligne d'alimentation,
la valeur de la limite $U_{C3mink}$ étant telle que la distance $F_k$ est supérieure ou égale à $D_k/2$

**12.** Système selon la revendication 10 ou 11, dans lequel les sous-stations ($S_k$) sont à équidistance les unes des autres.

**Patentansprüche**

1. Elektrischer Umrichter (30) für ein Umspannwerk ($S_k$) zur Versorgung eines Stromnetzes und/oder zur Rückgewinnung der Bremsenergie von Schienenfahrzeugen, die auf einem Gleis fahren, wobei das Umspannwerk mit einer Versorgungsleitung (6) verbunden ist, die geeignet ist, die auf dem Gleis fahrenden Schienenfahrzeuge mit einer Gleichspannung zu versorgen, das Umspannwerk ($S_k$) umfassend ein Stromverteilungsnetz (20), das geeignet ist, eine dreiphasige Spannung zu liefern, die drei Phasen entspricht, der Umrichter (30) umfassend:

   - einen Transformator (306), der geeignet ist, um den Wert der dreiphasigen Spannung zu steuern, die von dem Stromverteilungsnetz geliefert wird,
   - eine Filtervorrichtung (304), die geeignet ist, um die dreiphasige Spannung des Transformators (306) zu filtern, wobei die Filtervorrichtung (304) ein Filter ist, der die Stromoberschwingungen reduziert, die in das Stromverteilungsnetz (20) zurückspeist werden können, und
   - einen Wechselrichter (302), der mit der Filtervorrichtung (304) verbunden ist;
   **dadurch gekennzeichnet, dass** der Wechselrichter (302) für jede erzeugte Phase zwei Einheiten in Reihe (E1, E2, E3, E4, E5, E6) umfasst, wobei jede Einheit parallel (E1, E2, E3, E4, E5, E6) eine Diode (D1, D2, D3, D4, D5, D6) und einen Transistor (T1, T2, T3, T4, T5, T6) umfasst;
   die Filtervorrichtung (304) eine Schaltung ist und der Transformator (306) jeweils Dipole umfasst, die geeignet sind, um eine Induktivität der Filtervorrichtung (304) zu erzeugen.

2. Umrichter nach Anspruch 1, wobei jeder Transistor (T1, T2, T3, T4, T5, T6) ein Bipolartransistor mit isoliertem Gate ist.

3. Umrichter nach Anspruch 1 oder 2, wobei die Filtervorrichtung (304) drei Induktivitäten (L1, L2, L3) und drei Kondensatoren (C1, C2, C3) umfasst.

4. Umrichter nach Anspruch 3, wobei die drei Kondensatoren (C1, C2, C3) in Sternform angeordnet sind.

5. Umrichter nach einem der Ansprüche 3 oder 4, wobei die Filtervorrichtung (304) drei Eingänge (304E1, 304E2, 304E3) für die drei Phasen (P1, P2, P3) des Wechselrichters (302) und drei entsprechende Ausgänge (304S1, 304S2, 304S3) umfasst, wobei der Transformator (306) einerseits mit den Ausgängen der Filtervorrichtung (304) und andererseits mit dem Stromverteilungsnetz (20) verbunden ist;

   einen ersten Anschluss (L1B1) der ersten Induktivität (L1), der mit einem ersten Anschluss (C1B1) des ersten Kondensators (C1) und mit einem ersten Anschluss (C3B1) des dritten Kondensators (C3) verbunden ist; einen zweiten Anschluss (L1B2) der ersten Induktivität (L1), der mit dem ersten Eingang (304E1) der Filtervorrichtung (304), der der ersten Phase (P1) entspricht, verbunden ist;
   einen ersten Anschluss (L2B1) der zweiten Induktivität (L2), der mit einem zweiten Anschluss (C1B2) des ersten Kondensators (C1) und mit einem ersten Anschluss (C2B1) des zweiten Kondensators (C2) verbunden ist; einen zweiten Anschluss (L2B2) der zweiten Induktivität (L2), der mit dem zweiten Eingang (304E2) der Filtervorrichtung (304), der der zweiten Phase (P2) entspricht, verbunden ist;
   ein erster Anschluss (L3B1) der dritten Induktivität (L3) mit einem zweiten Anschluss (C2B2) des zweiten Kondensators (C2) und mit einem zweiten Anschluss (C3B2) des dritten Kondensators (C3) verbunden ist; ein zweiter Anschluss (L3B2) der dritten Induktivität (L3) mit dem dritten Eingang (304E3) der Filtervorrichtung (304), der der dritten Phase (P3) entspricht, verbunden ist.

6. Umrichter nach Anspruch 5, wobei ein erster Anschluss (C1B1) des ersten Kondensators (C1) mit dem ersten Ausgang (304S1) der Filtervorrichtung (304) verbunden ist und der zweite Anschluss (C1B2) des ersten Kondensators (C1) mit dem zweiten Ausgang (304S2) der Filtervorrichtung (304) verbunden ist;

   wobei der erste Anschluss (C2B1) des zweiten Kondensators (C2) mit dem zweiten Ausgang (304S2) der Filtervorrichtung (304) verbunden ist und ein zweiter Anschluss (C2B2) des zweiten Kondensators (C2) mit dem dritten Ausgang (304S3) verbunden ist;
   wobei der erste Anschluss (C3B1) des dritten Kondensators (C3) mit dem ersten Ausgang (304S1) der Filtervorrichtung (304) verbunden ist und der zweite Anschluss (C3B2) des dritten Kondensators (C3) mit dem dritten Ausgang (304S3) der Filtervorrichtung (304) verbunden ist.

7. Umrichter nach einem der Ansprüche 3 bis 6, wobei der Transformator (306) zwei Primärwicklungen (314, 316) und eine Sekundärwicklung (318) umfasst und jede Induktivität mit den drei dreiphasigen Verbindern von jeder Wicklung (314, 316, 318) verbunden ist.

8. Umrichter nach Anspruch 7, wobei die Filtervorrichtung (304) neun Induktivitäten und drei Kondensatoren (C1, C2, C3) umfasst;

  wobei die erste Induktivität (L1) für die erste Phase (P1) mit einem ersten Ausgang (318S1) der Sekundärwicklung (318) und mit einem ersten Ausgang (306S1) des Transformators (306) verbunden ist, die zweite Induktivität (L2) mit einem ersten Ausgang (314S1) der ersten Primärwicklung (314) und mit einem ersten Eingang (306E1) des Transformators (306) verbunden ist, und die dritte Induktivität (L3) mit einem ersten Ausgang (316S1) der ersten Primärwicklung (316) und mit einem zweiten Anschluss C2B2 des zweiten Kondensators (C2) verbunden ist; wobei die vierte Induktivität für die zweite Phase (P2) mit einem zweiten Ausgang (318S2) der Sekundärwicklung (318) und mit einem zweiten Ausgang (306S2) des Transformators (306) verbunden ist, wobei die fünfte Induktivität mit einem zweiten Ausgang (314S2) der ersten Primärwicklung (314) und einem zweiten Eingang (306E2) des Transformators (306) verbunden ist und die sechste Induktivität mit einem zweiten Ausgang (316S2) der ersten Primärwicklung (316) und einem zweiten Anschluss (C1B2) des ersten Kondensators (C1) verbunden ist; wobei die siebte Induktivität für die dritte Phase (P3) mit einem dritten Ausgang (318S3) der Sekundärwicklung (318) und mit einem dritten Ausgang (306S3) des Transformators (306) verbunden ist, die achte Induktivität mit einem dritten Ausgang (314S3) der ersten Primärwicklung (314) und mit einem dritten Eingang (306E3) des Transformators (306) verbunden ist und die neunte Induktivität mit einem dritten Ausgang (316S3) der ersten Primärwicklung (316) und mit einem ersten Anschluss (C3B1) des dritten Kondensators (C3) verbunden ist.

9. Umspannwerk zur Versorgung eines Stromnetzes und/oder zur Rückgewinnung ($S_k$) der Bremsenergie von Schienenfahrzeugen, die auf einem Gleis fahren, wobei das Umspannwerk ($S_k$) mit einer Versorgungsleitung (6) verbunden ist, die geeignet ist, die auf dem Gleis fahrenden Schienenfahrzeuge mit einer Gleichspannung zu versorgen, das Umspannwerk ($S_k$) umfassend:

  - ein Stromverteilungsnetz (20), das geeignet ist, um eine dreiphasige Spannung zu liefern, die drei Phasen entspricht,
  - einen einzigen Umrichter (30) nach einem der Ansprüche 1 bis 8.

10. Umspannwerk zur Versorgung eines Stromnetzes und/oder zur Rückgewinnung der Bremsenergie von Schienenfahrzeugen, das System umfassend eine Vielzahl von Umspannwerken ($S_k$) nach Anspruch 9.

11. Versorgungssystem eines Stromnetzes und/oder zur Rückgewinnung der Bremsenergie von Schienenfahrzeugen nach Anspruch 10:

  wobei die Vielzahl von Umspannwerken ($S_k$) in einem Abstand ($D_k$) von mehr als 100 Metern voneinander angeordnet sind, wobei jedes Umspannwerk ($S_k$) an einem Anschlusspunkt ($P_k$) elektrisch mit der Versorgungsleitung (6) verbunden und mit Folgendem ausgestattet ist:

  • einem Sensor (36) oder einem Schätzer einer Spannung $U_{ssk}$ auf Ebene des Anschlusspunkts ($P_k$),
  • ein Modul (32) zur Steuerung des Umrichters (30), das angepasst ist, um den Umrichter (30) automatisch in einen Regenerationsmodus zu schalten, in dem der Umrichter (30) kontinuierlich elektrische Energie von der Versorgungsleitung zu dem Stromverteilungsnetz überträgt, um die Bremsenergie von Schienenfahrzeugen zurückzugewinnen, sobald die gemessene oder geschätzte Spannung $U_{ssk}$ über einem Schwellenwert $U_{C3k}$ ist, sodass mit jedem Umspannwerk eine eigene Zone $Z_{fk}$ zur Bremsenergierückgewinnung assoziiert ist, in der das Umspannwerk $S_k$ unabhängig von der Position des Schienenfahrzeugs innerhalb dieser Zone $Z_{fk}$ in der Lage ist, mindestens einen Teil der Bremsenergie dieses Schienenfahrzeugs zurückzugewinnen,

  eine Zone $Z_{fk}$ zur Bremsenergierückgewinnung, die ein Segment [$L_{Gfk}$; $L_{Dfk}$] der Versorgungsleitung (6) ist, das um den Punkt $P_k$ zentriert ist und dessen Grenzen $L_{Gfk}$, $L_{Dfk}$ auf beiden Seiten des Punkts $P_k$ um einen Abstand $F_k$ gleich ($U_{Cmax}-U_{C3mink}$)/($\rho$ $I_{max}$) beabstandet sind, wobei:

  • $U_{Cmax}$ eine maximal zulässige nicht permanente Spannung auf der Versorgungsleitung ist,
  • $U_{C3mink}$ der Mindestwert ist, den der Schwellenwert $U_{C3k}$ während des Betriebs des Umspannwerks annehmen kann,
  • p der lineare Widerstand der Versorgungsleitung ist, und
  • $I_{max}$ die maximal zulässige Stromstärke für den in der Versorgungsleitung fließenden Strom ist,

wobei der Wert der Grenze $U_{C3mink}$ derart ist, dass der Abstand $F_k$ größer als oder gleich wie $D_k/2$ ist

**12.** System nach Anspruch 10 oder 11, wobei die Umspannwerke ($S_k$) äquidistant zueinander sind.

**Claims**

**1.** An electric converter (30) for a substation ($S_k$) for feeding an electric grid and/or recuperating braking energy from rail vehicles traveling on a railroad track, the substation being connected to a feeder line (6) able to supply a DC voltage to the rail vehicles traveling on the railroad track, the substation ($S_k$) comprising an electricity distribution grid (20) able to deliver a corresponding three-phase voltage with three phases, the converter (30) comprising:

- a transformer (306) able to inspect the value of the three-phase voltage delivered by the electricity distribution grid,
- a filtering device (304) able to filter the three-phase voltage from the transformer (306), the filtering device (304) being a filter reducing the current harmonics that may be reinjected on the electricity distribution grid (20).and
- an inverter (302) connected to the filtering device (304);

for each generated phase, the inverter (302) including, in series, two assemblies (E1, E2, E3, E4, E5, E6), each assembly (E1, E2, E3, E4, E5, E6) including a diode (D1, D2, D3, D4, D5, D6) and a transistor (T1, T2, T3, T4, T5, T6) in parallel;

the filtering device (304) being an LC circuit;
the transformer (306) including each of the dipoles able to generate an inductance of the filtering device (304).

**2.** The converter according to claim 1, wherein each transistor (T1, T2, T3, T4, T5, T6) is an insulated gate bipolar transistor.

**3.** The converter according to claim 1 or 2, wherein the filtering device (304) includes three inductances (L1, L2, L3) and three capacitors (C1, C2, C3).

**4.** The converter according to claim 3, wherein the three capacitors (C1, C2, C3) are arranged in star.

**5.** Converter according to claims 3 or 4, in which the filtering device (304) comprises three inputs (304E1, 304E2, 304E3), for the three phases (P1, P2, P3) of the inverter (302) and three corresponding outputs (304S1, 304S2, 304S3), the transformer (306) being connected, on the one hand, to the outputs of the filtering device (304) and, on the other hand, to the electricity distribution network (20), **characterized in that**

a first terminal (L1B1) of the first inductor (L1) being connected to a first terminal (C1B1) of the first capacitor (C1) and to a first terminal (C3B1) of the third capacitor (C3); a second terminal (L1B2) of the first inductor (L1) being connected to the first input (304E1) of the filter device (304) corresponding to the first phase (P1)
a first terminal (L2B1) of the second inductor (L2) being connected to a second terminal (C1B2) of the first capacitor (C1) and to a first terminal (C2B1) of the second capacitor (C2); a second terminal (L2B2) of the second inductor (L2) being connected to the second input (304E2) of the filtering device (304) corresponding to the second phase (P2);
a second terminal (L2B2) of the second inductor (L2) being connected to the second input (304E2) of the filter device (304) corresponding to the second phase (P2); a first terminal (L3B1) of the third inductor (L3) being connected to a second terminal (C2B2) of the second capacitor (C2) and to a second terminal (C3B2) of the third capacitor (C3); a second terminal (L3B2) of the third inductor (L3) being connected to the third input (304E3) of the filter device (304) corresponding to the third phase (P3).

**6.** Converter according to claim 5, wherein a first terminal (C1B1) of the first capacitor (C1) is connected to the first output (304S1) of the filter device (304) and the second terminal (C1 B2) of the first capacitor (C1) is connected to the second output (304S2) of the filter device (304) ;

the first terminal (C2B1) of the second capacitor (C2) being connected to the second output (304S2) of the filter device (304) and a second terminal (C2B2) of the second capacitor (C2) being connected to the third output (304S3);
the first terminal (C3B1) of the third capacitor (C3) being connected to the first output (304S1) of the filter device (304) and the second terminal (C3B2) of the third capacitor (C3) being connected to the third output (304S3) of the filter device (304).

**7.** A converter according to any one of claims 3 to 6, wherein the transformer (306) includes two primary windings (314, 316) and a secondary winding (318), and each inductor being connected to the three three-phase connectors of each winding (314, 316, 318).

**8.** The converter of claim 7, wherein the filter device (304) comprises nine inductors and three capacitors (C1, C2, C3).

for the first phase (P1), the first inductor (L1) being connected to a first output (318S1) of the secondary winding (318) and to a first output (306S1) of the transformer (306) the second inductor (L2) being connected to a first output (314S1) of the first primary winding (314) and to a first input (306E1) of the transformer (306), and the third inductor (L3) being connected to a first output (316S1) of the first primary winding (316) and to a second terminal C2B2 of the second capacitor (C2)

for the second phase (P2), the fourth inductor being connected to a second output (318S2) of the secondary winding (318) and to a second output (306S2) of the transformer (306) the fifth inductor being connected to a second output (314S2) of the first primary winding (314) and to a second input (306E2) of the transformer (306) and the sixth inductor being connected to a second output (316S2) of the first primary winding (316) and to a second terminal (C1B2) of the first capacitor (C1)

for the third phase (P3), the seventh inductor being connected to a third output (318S3) of the secondary winding (318) and to a third output (306S3) of the transformer (306) the eighth inductor being connected to a third output (314S3) of the first primary winding (314) and to a third input (306E3) of the transformer (306), and the ninth inductor being connected to a third output (316S3) of the first primary winding (316) and to a first terminal (C3B1) of the third capacitor (C3).

9. A substation ($S_k$) for feeding a grid and/or recuperating braking energy from rail vehicles traveling on a railroad track, the substation ($S_k$) being connected to a feeder line (6) able to supply a DC voltage to the rail vehicles traveling on the railroad track, the substation (Sk) comprising:

- an electricity distribution grid (20) able to deliver a corresponding three-phase voltage with three phases,
- a single converter (30) according to any one of claims 1 to 8.

10. A system for feeding an electric grid and/or for recuperating braking energy from rail vehicles, the system including a plurality of substations ($S_k$) according to claim 9.

11. A system for feeding an electric grid and/or for recuperating the braking energy from rail vehicles according to claim 10:

the plurality of substations ($S_k$) being spaced apart from one another by a distance ($D_k$) greater than 100 meters, each substation ($S_k$) is electrically connected to the feeder line (6) at a connecting point ($P_k$) and equipped with:

• a sensor (36) or an estimator of a voltage $U_{ssk}$ at the connecting point ($P_k$),
• a control module (32) of the converter (30) able to automatically switch the converter (30) into a regeneration mode in which the converter (30) continuously transfers electricity from the feeder line to the electricity distribution grid to recuperate the braking energy from the rail vehicles, once the measured or estimated voltage $U_{ssk}$ is above a threshold $U_{C3k}$, such that each substation is associated with its own braking energy recuperation zone $Z_{fk}$ in which, irrespective of the position of the rail vehicle within that zone $Z_{fk}$, the substation $S_k$ is capable of recuperating at least part of the braking energy of that rail vehicle,

a braking energy recuperation zone $Z_{fk}$ being a segment [$L_{Gfk}$; $L_{Dfk}$] of the feeder line (6) centered around the point $P_k$ and the boundaries $L_{Gfk}$, $L_{Dfk}$ of which are spaced apart on either side of the point $P_k$ by a distance $F_k$ equal to ($U_{Cmax}$-$U_{C3mink}$)/($\rho\ I_{max}$), where:

• $U_{Cmax}$ is a maximum nonpermanent allowable voltage on the feeder line,
• $U_{C3mink}$ is the minimum value that can be assumed by the threshold $U_{C3k}$ during the operation of the substation,
• $\rho$ is the linear resistance of the feeder line, and
• $I_{max}$ is the maximum allowable intensity for the current circulating on the feeder line, the value of the limit $U_{C3mink}$ is such that the distance $F_k$ is greater than or equal to $D_k/2$.

12. The system according to claim 10 or 11, wherein the substations ($S_k$) are equidistant from one another.

$\underline{\text{FIG.1}}$

EP 3 045 343 B1

**FIG.2**

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 101376344 A
- EP 1350666 A1

- FR 2873332